# EUROPÄISCHE PATENTSCHRIFT

(11) **EP 0 988 913 B1**
(45) Veröffentlichungstag und Bekanntmachung des Hinweises auf die Patenterteilung: **31.03.2004**
(21) Anmeldenummer: 99890264.7
(22) Anmeldetag: 05.08.1999
(51) Int. Cl.: B23D 35/00, B23D 19/06

(54) **Schneideeinrichtung mit distanziert aufgespanntem Kreisschermesser**
Spacer for a slitting apparatus with circular cutters
Entretoise dans un dispositif de coupe longitudinal de bandes ayant des couteaux circulaires

(30) Priorität: 24.09.1998 AT 159898
(43) Veröffentlichungstag der Anmeldung: 29.03.2000
(73) Patentinhaber: Böhler Miller Messer und Sägen GmbH, 3333 Böhlerwerk (AT)
(72) Erfinder: Eichler, Hubert, 3340 Waidhofen, Ybbs (AT); Wimmer, Alois, 3332 Rosenau (AT)
(74) Vertreter: Wildhack, Helmut, Dr. Dipl.-Ing.

(56) Entgegenhaltungen:
- EP-A- 0 938 942

## Beschreibung

Die Erfindung betrifft eine Schneideinrichtung zur Erstellung mindestens eines ununterbrochenen Schnittes von flächigem Material, bei welcher auf mindestens zwei Wellen Kreisschermesser, die schnittererzeugend zusammenwirken, durch Zwischenringe distanziert aufgespannt sind.

Zur Bearbeitung von flächigem Material, zum Beispiel zum Besäumen von Feinblechen oder zur Herstellung von Flachstreifen und dergleichen, werden runde Schermesser verwendet, die auf zwei axparallelen drehbaren Wellen aufgespannt sind und schnitterzeugend zusammenwirken. Um bei einer Schnitterstellung eine gewünschte Schnittgüte erreichen zu können, ist es dabei erforderlich, daß zwischen den zusammenwirkenden Kreisschermessern stimseitig ein genau dimensionierter Spalt gegeben ist, der durch den Werkstoff des Schnittgutes und dessen Dicke bestimmt wird. Soll gegebenenfalls eine Folie bzw. ein Stahlblech mit einer Dicke von 0,5 mm von einem Coil ablaufend in Streifen geschnitten werden, so ist, einer Faustregel folgend, ein Spalt bzw. ein Abstand zwischen den Stirnflächen des sich überlappenden Messerpaares von 0,05 mm erforderlich. Kleinere Messerabstände führen zu Materialstauchungen im Schnittbereich, wohingegen größere Spalte zu ungewünschter Gratbildung führen.

Bei einer Bestückung der Schneideinrichtung erfolgt eine Aufspannung der stimseitig feinstgeschliffenen oder geläppten, beispielsweise auf 1 bis 2 µm Rauhtiefe bearbeiteten Kreisschermesser, die mit dergleichen genau bearbeiteten Distanz- oder Zwischenringen distanziert werden, auf den einander gegenüberliegenden Wellen derart, daß mittels unterschiedlich breiter Ringe die geforderte Erzeugnisbreite und im Schnittbereich der gewünschte oder vorgesehene Spalt zwischen den sich überlappenden Seitenflächen der Messer erreicht werden.

Kreisschermesser haben oft einen Außendurchmesser bis zu 500 mm und größer. Einer hohen Genauigkeit der Aufspannung in Axrichtung wegen weist zumeist das System: Kreisschermesser- Zwischenringe-Spannteil kooperierende Stützflächen auf, die radial bis nahe an die Schneidkanten reichen, so daß der Außendurchmesser der Distanzringe gegebenenfalls nur geringfügig kleiner als jener der Kreisschermesser ist und daraus ein großes Distanzringvolumen resultiert.

Dicke Distanzringe bzw. breite Zwischenringe mit größerem Durchmesser, die aus Stahl gefertigt sind, haben auf Grund des großen Volumens eine hohe Masse bzw. besitzen oft ein beträchtliches Gewicht. Beim Bestücken einer Schneideinrichtung müssen die Zwischenringe auf die Wellen aufgeschoben werden, was dem hohen Gewicht zufolge oft Probleme bei der Manipulation und insbesondere die Gefahr einer Beschädigung und des Verschleißes von Teilen der Schneideinrichtung mit sich bringt.

Um das Gewicht von zwischen den Kreisschermessern oder einem Messer und einem Spannteil positionierten Distanzringen zu verringern, wurde schon eine Großzahl von Maßnahmen vorgeschlagen, weil eine Anordnung von vielen dünnen und daher leichten Zwischenringen nebeneinander die Genauigkeit und die Stabilität der Messerposition im praktischen Einsatz ungünstig beeinflussen kann.

Zur Verringerung des Spannringgewichtes ist schon versucht worden, Sonderformen mit geringem Volumen vorzusehen, was jedoch mit einem hohen Herstellungsaufwand und geringer Wirtschaftlichkeit verbunden ist. Ein weiterer Vorschlag bestand darin, die Zwischenringe aus Kunststoff zu fertigen. Diese Kunststoffringe haben jedoch den Nachteil, daß ein Quellen des Materials und Verschmutzungen sowie Beschädigungen mit seitlichen Wülsten entstehen können, wodurch die Aufspanngenauigkeit der Schermesser langfristig nicht im ausreichenden Maß gesichert ist.

Es sind auch Distanzringe mit vergleichsweise geringem Gewicht bekannt, welche einen Kunststoff-Ringkörper aufweisen, der in Längsaxrichtung koaxial von einer Vielzahl von harten Distanzstäben, die die Kreisschermesser stützen, durchsetzt ist. Eine derartige Ausführungsform eines Zwischenringes vermag zwar eine gewünschte Einspanngenauigkeit der Messer sicherstellen, kann jedoch zu einem stirnseitigen Messerverschleiß führen und besitzt weiters den Nachteil eines hohen Fertigungsaufwandes sowie die Problematik der gegenseitigen Abstützung dünner Ringe.

Eine Verwendung von leichteren Metallen wie zum Beispiel Titan ist für eine Distanzringerstellung zwar prinzipiell möglich, hat sich jedoch aus wirtschaftlichen Gründen nicht durchgesetzt.

Der Erfindung liegt die Aufgabe zugrunde, die Nachteile der bekannten Zwischenringe zu beseitigen und eine Schneideinrichtung der eingangs genannten Art mit Distanzringen zu schaffen, die ein geringes Gewicht haben, hohe Aufspanngenauigkeit der Kreismesser auf den Wellen sicherstellen, geringen Verschleiß besitzen sowie einen dergleichen beim Bestücken der Schneideinrichtung bewirken und niedrige Herstellkosten bzw. hohe Wirtschaftlichkeit aufweisen.

Die Aufgabe wird bei einer gattungsgemäßen Schneideinrichtung dadurch gelöst, daß die Zwischenringe aus mindestens zwei, im wesentlichen konzentrisch angeordneten Teilen bestehen, wobei der äußere Ringteil aus einem Werkstoff mit hoher Druckfestigkeit und der axnähere bzw. innere Ringteil aus einem solchen mit geringerem spezifischen Gewicht gebildet ist. Die Vorteile der so ausgebildeten Zwischenringe zwischen den Messerscheiben sind im wesentlichen darin zu sehen, daß einerseits eine Aufspannung der Teile auf den Wellen jeweils mittels einer konzentrischen ringförmigen Fläche mit einem hohen Axabstand erfolgt, wodurch eine stabile und genaue axnormale Stirnflächenpositionierung und somit eine dergleichen Schneidkantenhalterung gegeben sind. Auch die beim Schnitt von zum Beispiel zähharten Blechen gegebenenfalls in axialer Richtung auftretenden Kräfte führen dadurch zu keiner Verbreiterung des Schneidspaltes des Messerpaares. Andererseits wird die Konzentrizität der Kreisringfläche durch einen leichten Innenteil, der lediglich die radiale Halterung des Ringes auf der Welle zur Aufgabe hat, bewerkstelligt, was zu einer beträchtlichen Verringerung des Distanzringgewichtes führt.

Für eine hohe Haltbarkeit bei gewünschter Aufspannungsgenauigkeit hat es sich als vorteilhaft erwiesen, wenn der äußere Ringteil der Zwischenringe aus Metall, vorzugsweise aus Stahl, mit einer 0,02 Grenze der Festigkeit von größer als 100 N/mm² gebildet ist.

Eine besonders bevorzugte Form der Erfindung ist gegeben, wenn die Stimflächen des äußeren Ringteiles der Zwischenringe, die an einer Seitenfläche eines Kreisschermessers, an einer dergleichen Fläche eines Spannteiles oder an einem weiteren Ringteil anliegen, eine Größe aufweisen, deren Wert A [in mm²] 1,12 bis 1,78mal der höchsten axialen Aufspannkraft F [in N] gebrochen durch die niedrigste 0,02 Grenze der Festigkeit des Werkstoffes [in N/ mm²] vom äußeren Ringteil, Kreisschermesser und Spannteil beträgt. Erfindungsgemäß können damit geringste Distanzringgewichte bei hoher Aufspanngenauigkeit und problemfreier Werkstoff-Druckbeanspruchung auch im Langzeiteinsatz erreicht werden.

Wenn, wie weiters in günstiger Weise vorgesehen, der Zwischenring als Auswerfer für das flächige Material nach dem Schnitt ausgebildet ist, wobei auf der Außenseite des äußeren Ringteiles ein in radialer Richtung elastischer Teil, zum Beispiel ein Gummi- oder Federring oder dergleichen angeordnet ist, wird eine hohe Betriebssicherheit der Schneideinrichtung und eine verbesserte Ebenflächigkeit des Schnittgutes erreicht.

Bevorzugt weist der axnähere bzw. innere Ringteil des Zwischenringes eine Wichte von kleiner als 45 kN/m³ auf, was eine effiziente Herabsetzung des Distanzringgewichtes bewirkt.

Eine Verbesserung des Aufschiebens beim Bestücken der Wellen der Schneideinrichtung, aber auch eine Sicherheit gegen ein Verdrehen kann erreicht werden, wenn der innere Ringteil des Zwischenringes mindestens eine Ausnehmung aufweist, wobei es besonders günstig ist, wenn sich die radiale(n) in Axrichtung verlaufende(n) Ausnehmung(en) im inneren Ringteil des Zwischenringes bis zum äußeren Ringteil desselben erstreckt(erstrecken).

Geringste Gewichte bei hoher Axzentrizität sind erreichbar, wenn der innere Ringteil des Zwischenringes aus mindestens drei, jeweils zueinander einen Abstand aufweisenden Segmenten gebildet ist.

Im Sinne einer hohen Stabilität und Betriebssicherheit hat es sich als günstig erwiesen, wenn der äußere Ringteil und der innere, gegebenenfalls durch Segmente gebildete, Ringteil des Zwischenringes, insbesondere durch Befestigungssegmente, miteinander verbunden sind.

Schließlich ist von besonderem Vorteil, wenn der innere, gegebenenfalls durch Segmente gebildete Ringteil des Zwischenringes aus Kunststoff besteht. Dadurch ist bei hoher Aufspanngenauigkeit die Gefahr einer Beschädigung der Wellen oder deren Verschleißbelastung beim Bestücken der Schneideinrichtung minimiert.

Im folgenden wird die Erfindung anhand von lediglich einen Ausführungsweg darstellenden Zeichnungen näher erläutert.
Es zeigt jeweils in schematischer Darstellung:
- Fig. 1:: Messerpaar, das schnitterzeugend aufgespannt ist
- Fig. 2:: Zwischenring
- Fig. 3:: Zwischenring mit Auswerfer
- Fig. 4:: Zwischenring mit Ausnehmung
- Fig. 5:: Zwischenring mit Innenringsegmenten

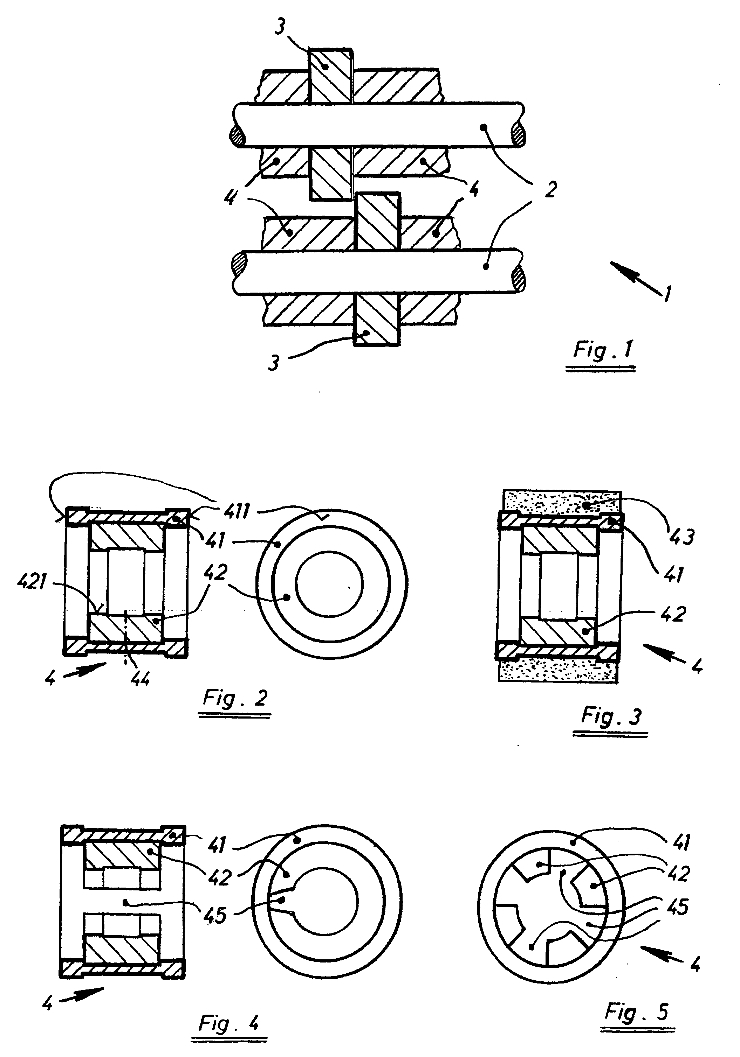

In Fig. 1 ist ein Teil einer Schneideinrichtung 1 und zwar zwei Kreisschermesser 3 , die schnitterzeugend zusammenwirken, allgemein dargestellt. Auf gegenüberliegenden Wellen 2 sind jeweils Kreismesser 3 derart positioniert, daß ein äußerer Bereich der Stirnflächen der Messer 3 einander überlappen. Eine Positionierung in Axrichtung der zusammenwirkenden Kreisschermesser 3 auf den Wellen 2 erfolgt über Zwischenringe bzw. Distanzringe 4.

Fig. 2 zeigt einen erfindungsgemäßen Zwischen- oder Distanzring 4 im Schnitt und in Ansicht, der erfindungsgemäß im wesentlichen durch einen äußeren Ringteil 41 1 und einen inneren Ringteil 42 gebildet ist. Am äußeren Ringteil 41 sind Stirnflächen 411, welche die Aufspannkräfte übermitteln, mit hoher Parallelität und Oberflächengüte gefertigt.

In Fig. 3 ist ein Zwischen- oder Distanzring 4 dargestellt, der außenseitig einen Auswerfer 43 besitzt. Der Auswerfer 43 besteht in der Darstellung aus elastischem Material, zum Beispiel Gummi, und ist mittels einer Klebung mit dem Außenring 41 verbunden.

Fig. 4 veranschaulicht einen Distanzring 4, der im inneren Ringteil 42 eine Ausnehmung 45 aufweist, welche einen Raum für einen Keil auf einer Welle 2 bilden kann.

In Fig. 5 ist ein Zwischenring 4 dargestellt, bei welchem ein Innnenring 42 aus Segmenten besteht, welche Segmente mit einem Außenring verbunden sind. Zwischen den Segmenten 42 sind jeweils Ausnehmungen 45 gebildet.

## Patentansprüche

1. Schneideinrichtung (1) zur Erstellung mindestens eines ununterbrochenen Schnittes von flächigem Material, bei welcher auf mindestens zwei Wellen (2) Kreisschermesser (3), die schnitterzeugend zusammenwirken, durch Zwischenringe (4) distanziert, aufgespannt sind, **dadurch gekennzeichnet, daß** die Zwischenringe (4) aus mindestens zwei, im wesentlichen konzentrisch angeordneten Teilen bestehen, wobei der äußere Ringteil (41) aus einem Werkstoff mit hoher Druckfestigkeit und der axnähere bzw. innere Ringteil (42) aus einem solchen mit geringem spezifischen Gewicht gebildet ist.

2. Schneideinrichtung nach Anspruch 1, **dadurch gekennzeichnet, daß** der äußere Ringteil (41) der Zwischenringe (4) aus Metall, vorzugsweise aus Stahl mit einer 0,02 Grenze der Festigkeit von größer als 100 N/mm² gebildet ist.

3. Schneideinrichtung nach Anspruch 1 oder 2, **dadurch gekennzeichnet, daß** die Stirnflächen (411) des äußeren Ringteiles (41) der Zwischenringe (4), die an einer Seitenfläche eines Kreisschermessers (3), an einer dergleichen Fläche eines Spannteiles oder an einem weiteren Ringteil (4) anliegen, eine Größe aufweisen, deren Wert A [n mm²] 1,12 bis 1,78mal der höchsten axialen Aufspannkraft F [in N] gebrochen durch die niedrigste 0,02 Grenze der Festigkeit des Werkstoffes in [N/mm²] vom äußeren Ringteil (41), Kreisschermesser (3) und Spannteil beträgt.

4. Schneideinrichtung nach einem der Ansprüche 1 bis 3, **dadurch gekennzeichnet, daß** der Zwischenring (4) als Auswerfer für das flächige Material nach dem Schnitt ausgebildet ist, wobei auf der Außenseite des äußeren Ringteiles (4) ein in radialer Richtung elastischer Teil (43), zum Beispiel ein Gummi- oder Federring oder dergleichen angeordnet ist.

5. Schneideinrichtung nach einem der Ansprüche 1 bis 4, **dadurch gekennzeichnet, daß** der axnähere bzw. innere Ringteil (42) des Zwischenringes (4) eine Wichte von kleiner als 45 [kN/m³] aufweist.

6. Schneideinrichtung nach einem der Ansprüche 1 bis 5, **dadurch gekennzeichnet, daß** der innere Ringteil (42) des Zwischenringes (4) mindestens eine radiale in Axrichtung verlaufende Ausnehmung (45) aufweist.

7. Schneideinrichtung nach einem der Ansprüche 1 bis 6, **dadurch gekennzeichnet, daß** sich die radiale(n) in Axrichtung verlaufende(n) Ausnehmungen(en) (45) im inneren Ringteil (42) des Zwischenringes (4) bis zum äußeren Ringteil (41) desselben erstreckt ( erstrecken).

8. Schneideinrichtung nach einem der Ansprüche 1 bis 7, **dadurch gekennzeichnet , daß** der innere Ringteil (42) des Zwischenringes (4) aus mindestens drei jeweils zueinander einen Abstand aufweisenden Segmenten gebildet ist.

9. Schneideinrichtung nach einem der Ansprüche 1 bis 8, **dadurch gekennzeichnet, daß** der äußere Ringteil (41) und der innere, gegebenenfalls durch Segmente gebildete Ringteil (42) des Zwischenringes (4), insbesondere durch Befestigungselemente (44), miteinander verbunden sind.

10. Schneideinrichtung nach einem der Ansprüche 1 bis 9, **dadurch gekennzeichnet, daß** der innere, gegebenenfalls durch Segmente gebildete Ringteil (42) des Zwischenringes (4) aus Kunststoff besteht.

## Claims

1. Slitting apparatus (1) for making at least one continuous cut from flat material, with circular shears (3) that cooperate in a slit-generating way and that are mounted on at least two shafts (2) spaced by intermediate rings (4), **characterized in that** said intermediate rings (4) consist of at least two, basically concentrically arranged parts, the outer ringpart (41) being formed of a material with high resistance to pressure and the inner ring part (42) being formed of a material with low specific gravity.

2. Slitting apparatus according to claim 1, **characterized in that** the outer ringpart (41) of the intermediate rings (4) is formed of metal, especially steel with a 0,02 limit of stability of more than 100N/mm².

3. Slitting apparatus according to claim 1 or 2, **characterized in that** the fore faces (411) of the outer ringpart (41) of the intermediate rings (4) being adjacent to a side face of one circular shear (3) to one face of a mounted part or to one further ringpart (4), have dimensions with a value A[n mm²] being 1,12 to 1,78 times the highest axial mounting force F [in N] divided by the lowest 0,02 limit of stability of the material in [N/mm²] of the outer ringpart (41), the circular shears (3) and the mounting part.

4. Slitting apparatus according to one of the claims 1 to 3, **characterized in that** the intermediate ring (4) is formed as ejector of the flat material after cutting, an part (43), that is elastic in radial direction, e.g. a ring made of rubber, a spring washer or such like being arranged on the outside of the outer ringpart (4).

5. Slitting apparatus according to one of the claims 1 to 4, **characterized in that** the part of the ringpart (42) closer to the axis or the inner ringpart (42) respectively of the intermediate ring (4) has a specific gravity of less than 45 [kN/m³].

6. Slitting apparatus according to one of the claims 1 to 5, **characterized in that** the inner ringpart (42) of the intermediate ring (4) has at least one recess (45) extending radially and in the direction of the axis.

7. Slitting apparatus according to one of the claims 1 to 6, **characterized in that** the recess(es) (45) extending radially and in the direction of the axis extend(s) in the inner ringpart (42) of the intermediate ring (4) to the outer ringpart (41) of the same.

8. Slitting apparatus according to one of the claims 1 to 7, **characterized in that** the inner ringpart (42) of the intermediate ring (4) consists of a least three segments spaced to each other.

9. Slitting apparatus according to one of the claims 1 to 8, **characterized in that** the outer ringpart (41) and the inner ringpart (42) of the intermediate ring (4), possibly formed by segments, are connected to each other, especially by fastening elements.

10. Slitting apparatus according to one of the claims 1 to 9, **characterized in that** the inner ringpart (42) of the intermediate ring (4), possibly formed by segments, consists of synthetic material.

## Revendications

1. Dispositif de coupe (1) pour former au moins un coupe ininterrompu de matière plate, avec des couteaux circulaires (3) distanciés par des anneaux intermédiaires (4) qui coopèrent en un mode coupe-produisant et qui sont montés sur au moins deux axes (2), **caractérisés en ce que** les anneaux intermédiaires (4) ses composent au moins de deux parts, arrangés considérablement du mode concentrique, et que le part de l'anneau extérieur (41) se compose d'une matière de résistance de pression élevée et que le part de l'anneau intérieur (42) se compose d'une matière de pesanteur spécifique bas.

2. Dispositif de coupe (1) selon revendication 1, **caractérisé en ce que** le part de l'anneau extérieur (41) des anneaux intermédiaires (4) se compose de métal, en particulier en acier avec un 0,02 limite de stabilité de plus de 100 N/m².

3. Dispositif de coupe (1) selon revendication 1 ou 2, **caractérisé en ce que** les faces en vue (411 ) du part de l'anneau extérieur. (41) des anneaux intermédiaires (4), attenant à une face de côté d'un couteau circulaire (3) et à une face similaire d'un part de montage ou à un autre part d'anneau (4), ont une dimension d'une valeur A [n mm²], qui est 1,12 jusqu'à 1,78 multipliée avec la force de montage le plus élevée F [N] divisée par le 0,02 limite de stabilité de la matière le plus bas [N/mm²] du part de l'anneau extérieur (41), du couteau circulaire (3) et du part de montage.

4. Dispositif de coupe (1) selon revendication 1 jusqu'à 3, **caractérisé en ce que** l'anneau intermédiaire (4) est formé comme éjecteur pour la matière plate après le coupe, et que un part élastique, p.ex. en caoutchouc ou un ressort d'anneau de grenadière ou pareil, est arrangé en direction radiale à l'extérieur de l'anneau extérieur (41 ).

5. Dispositif de coupe (1) selon revendication 1 jusqu'à 4, **caractérisé en ce que** le part de l'anneau intérieur ou plus proche à l'axe (42) de l'anneau intermédiaire (4), a un pesanteur spécifique de moins de 45 [kN/m³].

6. Dispositif de coupe (1) selon revendication 1 jusqu'à 5, **caractérisé en ce que** le part de l'anneau intérieur (42) de l'anneau intermédiaire (4) a au moins une embrasure (45) radiale s'étendante en direction axiale.

7. Dispositif de coupe (1) selon revendication 1 jusqu'à 6, **caractérisé en ce que** les embrasures (45) radiales s'étendantes en direction axiale s'étendent dans le part de l'anneau intérieur (42) de l'anneau intermédiaire (4) jusqu'au part de l'anneau extérieur (41) de même.

8. Dispositif de coupe (1) selon revendication 1 jusqu'à 7, **caractérisé en ce que** le part de l'anneau intérieur (42) de l'anneau intermédiaire (4) est composé par au moins trois segments distanciés l'un de l'autre.

9. Dispositif de coupe (1) selon revendication 1 jusqu'à 8, **caractérisé en ce que** le part de l'anneau extérieur (41) et que le part de l'anneau intérieur (42), qui est peut-être formé par des segments, de l'anneau intermédiaire (4), sont raccordés l'un à l'autre, en particulier par des moyens d'attacher (44).

10. Dispositif de coupe (1) selon revendication 1 jusqu'à 9, **caractérisé en ce que** le part de l'anneau intérieur (42), qui est peut-être formé par des segments, de l'anneau intermédiaire (4) se constitue des matières plastiques.
